# EUROPÄISCHE PATENTSCHRIFT

(11) **EP 2 671 746 B1**
(45) Veröffentlichungstag und Bekanntmachung des Hinweises auf die Patenterteilung: **30.09.2020**
(21) Anmeldenummer: 13167797.3
(22) Anmeldetag: 15.05.2013
(51) Int. Cl.: H05B 47/185, B60L 1/14

(54) **Beleuchtungssystem und Verfahren zum Betrieb eines Beleuchtungssystems, insbesondere für ein Schienenfahrzeug**
Lighting system and method for operating a lighting system, in particular for a rail vehicle
Système d'éclairage et procédé de fonctionnement d'un système d'éclairage, notamment pour un véhicule ferroviaire

(30) Priorität: 04.06.2012 DE 102012011075
(43) Veröffentlichungstag der Anmeldung: 11.12.2013
(73) Patentinhaber: SBF Spezialleuchten GmbH, 04316 Leipzig (DE)
(72) Erfinder: Heilmann, Andreas, 04316 Leipzig (DE); Wendt, Sven, 04316 Leipzig (DE)
(74) Vertreter: Reichert & Lindner Partnerschaft Patentanwälte

(56) Entgegenhaltungen:
- US-A1- 2009 021 955
- US-A1- 2011 101 889
- US-A1- 2012 081 015
- Anonymous: "Redundancy (engineering) - Wikipedia", , 15 September 2011 (2011-09-15), XP055566734, Retrieved from the Internet: URL:https://en.wikipedia.org/w/index.php?t itle=Redundancy_(engineering)&direction=pr ev&oldid=452415026 [retrieved on 2019-03-08]

## Beschreibung

Die Erfindung betrifft ein Beleuchtungssystem, ein Massentransportmittel mit einem solchen Beleuchtungssystem, sowie ein Verfahren zum Betrieb eines Beleuchtungssystems. Die Erfindung wird speziell in Zusammenhang mit der elektrischen Ausrüstung eines Massentransportmittels, insbesondere eines Schienenfahrzeuges beschrieben. Es wird darauf hingewiesen, dass die Erfindung aber vorteilhaft auch unabhängig vom Typ des Massentransportmittels angewendet werden kann.

Aus dem Stand der Technik sind Fahrzeuge mit elektrischen Verbrauchern und einem elektrischen Bordnetz zur Energieversorgung dieser Verbraucher bekannt. Üblicherweise enthält das Bordnetz eine Energieversorgungsvorrichtung zum Bereitstellen einer vorbestimmten elektrischen Versorgungsspannung sowie eine Stromleiteinrichtung, welche mit der Energieversorgungsvorrichtung elektrisch verbunden ist, um die Versorgungsspannung den verschiedenen elektrischen Verbrauchern zur Verfügung zu stellen. Darüber hinaus sind die Verbraucher mit ihren lokalen Steuerungen häufig auch an ein zentrales Steuersystem angeschlossen, über welches Steuerdaten, Messdaten und ergleichen kommuniziert werden.

Die US Patentanmeldung US 2012/0081015 A1 offenbart ein Verfahren und eine Vorrrichtung zur Lichtausendung bei einem auf LEDs basierenden System. Die individuell gesteuerten LEDs sind in Reihe geschaltet und werden von einer Steuereinrichtung gesteuert. Jede der individuell in Reihe geschalteten LEDs kann mehrere LEDs umfassen, die ebenfalls individuell gesteuert werden können. Die Steuereinrichtung ermöglicht die Stromversorgung und Seutersignale der LEDs über eine Leitung 1.

Die US Patentanmeldung US 2011/0101889 A1 offenbart ein Verfahren und eine Vorrichtung zu Bestimmung der relativen Position von LED-Beleuchtungseinheiten. Die Beleuchtungseinheiten sind in Reihe angeordent. Jeder der Beleuchtungseinheiten wird einmal adressiert und die Anzahl der Ereignisse einer jeden Beleuchtungseinheit werden gezählt. Die Anzahl der Ereignisse ist eindeutig für jede Position der LED-Beleuchtungseiheiten.

Die US Patentanmeldung US 2009/0021955 A1 offenbart ein Kontrollnetzwerk für ein auf LED basierten System für ein Massentransportmittel. Die Beleuchtung des Fahrzeuginnenraums erfolgt aus Basis einer Master-Slave-Schaltung. Ein Master kontrolliert eine Vielzahl von LED-Slaves über einen Leistungs- und Kommunikationsbus. Jeder Slave umfasst eine Leistungsregulierung, so dass der Strom aufgrund von Temperaturmessungen an der LED angepasst werden kann.

Insbesondere bei Massentransportmitteln mit einer sehr großen Anzahl an elektrischen Verbrauchern wird eine entsprechend große Anzahl an Energieversorgungsleitungen und Datenleitungen benötigt. Die großen Leitungsmengen führen häufig auch zu Platz- und Gewichtsproblemen. Dies gilt insbesondere auch für das Beleuchtungssystem von Schienenfahrzeugen.

Es ist daher Aufgabe der Erfindung, ein verbessertes Beleuchtungssystem zu schaffen. Das verbesserte Beleuchtungssystem soll dabei insbesonders die oben genannten Platz- und Gewichtsprobleme reduzieren.

Diese Aufgabe wird gelöst durch ein Beleuchtungssystem mit den Merkmalen des Anspruches 1 und ein Verfahren zum Betrieb eines Beleuchtungssystems mit den Merkmalen des Anspruches 9. Besonders bevorzugte Weiterbildungen und Ausgestaltungen der Erfindung sind in den abhängigen Ansprüchen angegeben.

Das Beleuchtungssystem, welches insbesondere für ein Schienenfahrzeug geeignet ist, weist eine Energieversorgungseinrichtung zum Bereitstellen einer vorbestimmten elektrischen Versorgungsspannung, vorzugsweise einer vorbestimmten Versorgungsgleichspannung oder einer Versorgungswechselspannung, und wenigstens eine Beleuchtungseinrichtung, welche über eine Stromleiteinrichtung mit der Energieversorgungseinrichtung elektrisch leitend verbunden ist und wenigstens ein Leuchtmittel auf. Das erfindungsgemäße Beleuchtungssystem weist ferner eine Hauptsteuereinrichtung auf, welche vorgesehen ist, um über die Stromleiteinrichtung ein Betriebssignal an die wenigstens eine Beleuchtungseinrichtung zu übertragen. Außerdem weist die wenigstens eine Beleuchtungseinrichtung (jeweils) eine Nebensteuereinrichtung auf, welche mit der Stromleiteinrichtung verbunden und vorgesehen ist, um das von der Hauptsteuereinrichtung über die Stromleiteinrichtung übertragene Betriebssignal zu empfangen und einen Betriebszustand des wenigstens einen Leuchtmittels der Beleuchtungseinrichtung in Abhängigkeit von dem empfangenen Betriebssignal zu steuern.

Das erfindungsgemäße Beleuchtungssystem bietet den Vorteil, dass über die Stromleiteinrichtung den Beleuchtungseinrichtungen nicht nur die elektrische Versorgungsspannung zur Verfügung gestellt wird, sondern, dass die Stromleiteinrichtung auch zum Übertragen der Betriebssignale von der (zentralen) Hauptsteuereinrichtung zu den (lokalen) Nebensteuereinrichtungen der Beleuchtungseinrichtungen genutzt wird. Auf diese Weise können zusätzliche Signalleitungen entfallen, sodass auch der durch solche Datenleitungen belegte Raum und ihr Gewicht nicht mehr anfallen. Das Beleuchtungssystem der Erfindung kann somit platz-, gewicht- und kostensparend aufgebaut werden. Der durch die entfallenden Signalleitungen eingesparte Raum kann ggf. anderweitig genutzt werden.

Das erfindungsgemäße Beleuchtungssystem bietet weiter den Vorteil, dass aufgrund des verringerten Gesamtgewichts der für eine Beschleunigung des jeweiligen Fahrzeugs erforderliche Energieaufwand ebenfalls verringert ist.

Das Beleuchtungssystem der Erfindung enthält wenigstens eine Beleuchtungseinrichtung, d.h. eine, zwei, drei oder mehr Beleuchtungseinrichtungen. Das erfindungsgemäße Beleuchtungssystem ist insbesondere für eine (sehr) große Anzahl von Beleuchtungseinrichtungen vorteilhaft geeignet. Zu den Beleuchtungseinrichtungen zählen im Sinne der Erfindung insbesondere Hauptbeleuchtungen zum direkten oder indirekten Beleuchten von Fahrzeuginnenräumen (z.B. Deckenleuchten, Wandleuchten, etc.), Neben- oder Spezialbeleuchtungen (z.B. Leseleuchten, Arbeitsplatzleuchten, Hinterleuchtungen von Hinweisschildern, etc.). Das Beleuchtungssystem enthält in diesem Zusammenhang eine Anzahl gleichartiger Beleuchtungseinrichtungen oder unterschiedliche Beleuchtungseinrichtungen. In einem Massentransportmittel wie einem Schienenfahrzeug können ein oder mehrere gleichartige oder unterschiedliche Beleuchtungssysteme der Erfindung eingesetzt werden.

Die "Beleuchtungseinrichtungen" weisen jeweils wenigstens ein Leuchtmittel auf. Je nach Art und Einsatz der Beleuchtungseinrichtungen weisen diese ein, zwei, drei oder eine größere Anzahl von Leuchtmitteln auf. Eine Beleuchtungseinrichtung kann entweder eine Anzahl gleichartiger Leuchtmittel oder unterschiedliche Leuchtmittel enthalten. Zu den geeigneten Leuchtmitteln zählen in diesem Zusammenhang insbesondere Leuchtdioden (LEDs), Leuchtstoffröhren, Halogenlampen, Energiesparlampen und dergleichen. Die Beleuchtungseinrichtungen bzw. deren Leuchtmittel werden über die Stromleiteinrichtung mit elektrischer Energie versorgt.

Unter einer "Stromleiteinrichtung" im Sinne der Erfindung ist eine Einrichtung zu verstehen, welche insbesondere der Übertragung von elektrischer Energie aus der Energieversorgungseinrichtung an die angeschlossenen Beleuchtungseinrichtungen dient. Die erfindungsgemäße Stromleiteinrichtung ist mit einem Kabelbaum ausgebildet. Neben Leitungen für hohe elektrische Leistung zum Bereitstellen der Versorgungsspannung, nachfolgend auch Zuleitungen genannt, weist der Kabelbaum aber keine separaten (Signal-)Leitungen zur Datenübertragung auf. Die Zuleitungen sind mittels ihrer Bemessung bzw. ihres elektrischen Widerstands besonders für die Übertragung hoher elektrischer Leistungen geeignet. Vorzugsweise sind die Zuleitungen der Stromleiteinrichtung so bemessen, dass sie dauerhaft bei einem zeitlich und über die angeschlossenen Verbrauchseinrichtungen gemittelten Strom betrieben werden können.

Die Energieversorgungseinrichtung weist vorzugsweise zwei elektrische Versorgungsanschlüsse unterschiedlicher Polarität auf, an denen die Versorgungsspannung abgegriffen werden kann. Die Zuleitungen der Stromleiteinrichtung sind mit den Versorgungsanschlüssen der Energieversorgungseinrichtung elektrisch leitend verbunden.

Unter einer "Hauptsteuereinrichtung" Sinne der Erfindung ist eine vorzugsweise zentrale Einrichtung zu verstehen, welche insbesondere zur Ansteuerung von Beleuchtungseinrichtungen bzw. deren Nebensteuereinrichtungen dient. Die Hauptsteuereinrichtung ist vorgesehen, um zumindest zeitweise ein Betriebssignal bereitzustellen und über die Zuleitungen der Stromleiteinrichtung zu übertragen.

Vorzugsweise wird die Hauptsteuereinrichtung über die Stromleiteinrichtung aus der Energieversorgungseinrichtung mit elektrischer Energie versorgt. Besonders bevorzugt ist zwischen die Hauptsteuereinrichtung und die Stromleiteinrichtung ein erster Spannungswandler geschaltet, welcher die Versorgungsspannung an die Betriebsspannung der Hauptsteuereinrichtung anpasst. Diese Ausgestaltung bietet den Vorteil, dass eine separate Energieversorgung der Hauptsteuereinrichtung entfallen kann.

Die Hauptsteuereinrichtung stellt das Betriebssignal vorzugsweise zu einem vorbestimmten Zeitpunkt bereit. Unter einem "vorbestimmten Zeitpunkt" ist in diesem Zusammenhang zu verstehen, dass das Betriebssignal bevorzugt bereitgestellt wird auf Basis
- eines hinterlegten Zeitplans, welcher Zeitpunkte zum Einschalten und/oder Ausschalten der angeschlossenen Beleuchtungseinrichtungen enthält, oder
- eines Signals einer nicht dem Beleuchtungssystem zugehörigen Steuerung, vorzugsweise einer übergeordneten Fahrzeugsteuerung, oder
- der Betätigung einer zugehörigen Bedieneinrichtung durch einen Bediener, oder
- eines hinterlegten Maßnahmenplans, welcher Abstellmaßnahmen insbesondere zur Reaktion auf unerwünschte Betriebszustände der Beleuchtungseinrichtungen oder anderer Verbrauchseinrichtungen enthält.

Unter einer "Nebensteuereinrichtung" im Sinne der Erfindung ist eine (dezentrale) Einrichtung zu verstehen, welche insbesondere dazu dient, den Betrieb der jeweiligen Beleuchtungseinrichtung bzw. ihrer Leuchtmittel zu steuern und ggf. auch zu überwachen. Die Nebensteuereinrichtungen der Beleuchtungseinrichtungen werden vorzugsweise ebenfalls über die Stromleiteinrichtung von der Energieversorgungseinrichtung mit elektrischer Energie versorgt. Besonders bevorzugt ist zwischen eine Nebensteuereinrichtung und die Stromleiteinrichtung ein zweiter Spannungswandler geschaltet, welcher die Versorgungsspannung an die Betriebsspannung der Nebensteuereinrichtung anpasst. Diese Ausgestaltung bietet den Vorteil, dass eine separate Energieversorgung der Nebensteuereinrichtung entfallen kann.

Unter einem "Betriebsparameter" eines Leuchtmittels einer Beleuchtungseinrichtung sollen sämtliche Parameter betreffend seinen Betriebszustand verstanden werden, welche gesteuert werden können. Zu den Betriebsparametern zählen in diesem Zusammenhang insbesondere Ein/Aus, Helligkeit bzw. Strahlungsintensität, Farbe bzw. Strahlungsspektrum, und dergleichen.

Die Betriebsparameter der Leuchtmittel werden in Abhängigkeit von dem von der Hauptsteuerung übertragenen Betriebssignal gesteuert. Dieses "Betriebssignal" ist ein Steuer- oder Datensignal, welches von den Nebensteuereinrichtungen der Beleuchtungseinrichtungen verarbeitet werden kann. Das Betriebssignal kann eine Steueranweisung für einen Betriebsparameter oder für mehrere Betriebsparameter eines Leuchtmittels enthalten; das Betriebssignal kann eine Steueranweisung für ein Leuchtmittel oder für mehrere Leuchtmittel einer Beleuchtungseinrichtung enthalten. Den Beleuchtungseinrichtungen des erfindungsgemäßen Beleuchtungssystems können jeweils gleiche Betriebssignale oder unterschiedliche Betriebssignale übertragen werden. Den Beleuchtungseinrichtungen des erfindungsgemäßen Beleuchtungssystems können die Betriebssignale im Wesentlichen zeitgleich oder nacheinander übertragen werden.

In einer bevorzugten Ausgestaltung der Erfindung weist die Stromleiteinrichtung genau eine erste Zuleitung und genau zweite Zuleitung auf. Die erste Zuleitung ist mit dem ersten Versorgungsanschluss der Energieversorgungseinrichtung verbunden und die zweite Zuleitung ist mit dem zweiten Versorgungsanschluss der Energieversorgungseinrichtung verbunden. Nachfolgend wird die zwischen den Zuleitungen anliegende elektrische Spannung auch als Busspannung bezeichnet. Über die beiden Zuleitungen unterschiedlicher Polarität können zeitgleich sowohl elektrische Leistung als auch Betriebssignale übertragen werden. Diese bevorzugte Ausgestaltung bietet den Vorteil, dass der Aufwand zum Anbringen von Steckern an den Stromleitungen verringert werden kann. Diese bevorzugte Ausgestaltung bietet den Vorteil, dass der Aufwand zur Herstellung der Stromleiteinrichtung bzw. des Kabelbaums minimiert ist. Diese bevorzugte Ausgestaltung bietet den weiteren Vorteil, dass der Aufwand zur Verlegung der Stromleiteinrichtung bzw. des Kabelbaums minimiert ist.

In einer bevorzugten Ausgestaltung der Erfindung ist die Hauptsteuereinrichtung ausgestaltet, um das Betriebssignal über die Stromleiteinrichtung als ein auf die Versorgungsspannung der Energieversorgungseinrichtung aufmoduliertes Modulationssignal oder als ein Niederspannungssignal, dessen Signalpegel unter dem Versorgungsspannungsniveau der Energieversorgungseinrichtung liegt, zu übertragen.

Die Übertragung des Betriebssignals als Modulationssignal ist insbesondere dann vorteilhaft einsetzbar, wenn die Beleuchtungseinrichtungen über die Stromleiteinrichtung von der Energieversorgungseinrichtung bereits mit elektrischer Energie versorgt werden, d.h. wenigstens ein Teil der Leuchtmittel wenigstens eines Teils der angeschlossenen Beleuchtungseinrichtungen in Betrieb ist. Die Übertragung des Betriebssignals als Niederspannungssignal ist insbesondere dann vorteilhaft einsetzbar, wenn die an die Stromleiteinrichtung angeschlossenen Beleuchtungseinrichtungen nicht in Betrieb sind, d.h. über die Stromleiteinrichtung noch keine hohe elektrische Energie zum Betrieb der Leuchtmittel übertragen wird.

Die Hauptsteuereinrichtung ist ausgestaltet, um eine der genannten Übertragungsarten des Betriebssignals durchführen zu können, oder ist ausgestaltet, um beide genannten Übertragungsarten des Betriebssignals durchführen zu können. Die Nebensteuereinrichtungen der angeschlossenen Beleuchtungseinrichtungen sind entsprechend ausgestaltet, um die übertragenen Betriebssignale empfangen und auswerten zu können.

In einer bevorzugten Ausgestaltung der Erfindung weist die wenigstens eine Beleuchtungseinrichtung eine Messeinrichtung zum Erfassen wenigstens eines Betriebsparameters des wenigstens einen Leuchtmittels der Beleuchtungseinrichtung auf und ist die Nebensteuereinrichtung ausgestaltet, über die Stromleiteinrichtung ein dem wenigstens einen erfassten Betriebsparameter entsprechendes Betriebszustandssignal an die Hauptsteuereinrichtung zu übertragen. Diese bevorzugte Ausgestaltung bietet den Vorteil, dass eine Rückkopplung bzw. -meidung von Betriebsparametern der Beleuchtungseinrichtungen bzw. deren Leuchtmitteln von den Nebensteuereinrichtungen an die Hauptsteuereinrichtung ebenfalls über die Stromleiteinrichtung möglich ist.

Unter einem "Betriebsparameter" im Sinne der Erfindung ist ein Parameter der Leuchtmittel der Beleuchtungseinrichtungen zu verstehen, welcher insbesondere einen Rückschluss auf einen erwünschten oder einen ungeplanten bzw. unerwünschten Betriebszustand der Beleuchtungseinrichtung bzw. deren Leuchtmittel gestattet. Anhand des oder der erfassten Betriebsparameter soll bevorzugt ein Defekt oder eine Fehlfunktion des/der Leuchtmittel einer Beleuchtungseinrichtung feststellbar sein. In einem solchen Fall kann die Hauptsteuereinrichtung ggf. eine Abstellmaßnahme einleiten, beispielsweise eine andere Beleuchtungseinrichtung entsprechend ansteuern. Zu den Betriebsparametern zählen in diesem Zusammenhang insbesondere eine an einem Leuchtmittel anliegende elektrische Spannung, ein durch ein Leuchtmittel fließender elektrischer Strom, ein elektrischer Widerstand eines Leuchtmittels, eine Strahlungsintensität oder -helligkeit in der Nähe oder Umgebung eines Leuchtmittels, ein Strahlungsspektrum in der Nähe oder Umgebung eines Leuchtmittels und dergleichen.

Die "Messeinrichtung" ist eine Einrichtung, die ausgestaltet und angeordnet ist, um einen gewünschten Betriebsparameter eines oder mehrerer Leuchtmittel der jeweiligen Beleuchtungseinrichtung zu erfassen. Die Messeinrichtung ist vorzugsweise mit der Nebensteuereinrichtung der Beleuchtungseinrichtung verbunden. Die Messeinrichtung weist bevorzugt eine oder mehrere der folgenden Komponenten auf: ·Spannungsfühler, Strommesser, Temperaturfühler bzw. Thermoelement, Drucksensor, Sensor für einen chemischen Stoff ("Stoffsensor"), Gassensor, Flüssigkeitssensor, Lagesensor oder Beschleunigungssensor.

Die Betriebssignale der Hauptsteuereinrichtung und die Betriebszustandssignale der Nebensteuereinrichtung werden vorzugsweise in verschiedenen Zeitintervallen über die Stromleiteinrichtung übertragen. Dies hat den Vorteil, dass sich die Betriebssignale und die Betriebszustandssignale nicht gegenseitig stören können. Die Auswahl bzw. Einstellung der verschiedenen Zeitintervalle erfolgt vorzugsweise anhand eines vorbestimmten Übertragungsprotokolls, welches der Hauptsteuereinrichtung und den Nebensteuereinrichtungen bekannt ist.

In einer bevorzugten Ausgestaltung der Erfindung werden die Betriebszustandssignale von den Nebensteuereinrichtungen der Beleuchtungseinrichtungen nur dann generiert und über die Stromleiteinrichtung an die Hauptsteuereinrichtung übertragen, wenn ein erfasster Betriebsparameter des wenigstens einen Leuchtmittels in der entsprechenden Beleuchtungseinrichtung außerhalb eines vorgegebenen Wertebereichs liegt. Liegt ein erfasster Betriebsparameter außerhalb des vorgegebenen Wertebereichs, so kann daraus auf einen Defekt oder eine Fehlfunktion geschlossen werden. Wenn nur in einem solchen Fall die entsprechenden Betriebszustandssignale übertragen werden, kann der Datenverkehr über die Stromleiteinrichtung vorteilhaft (auf ein notwendiges Maß) reduziert werden.

In einer noch weiteren bevorzugten Ausgestaltung der Erfindung enthält das von der Hauptsteuereinrichtung übertragene Betriebssignal eine Kennung zur Adressierung wenigstens einer der wenigstens einen Beleuchtungseinrichtung. Diese bevorzugte Ausgestaltung bietet den Vorteil, dass von der Hauptsteuereinrichtung über die Stromleiteinrichtung eine einzelne unter mehreren angeschlossenen Beleuchtungsseinrichtungen angesteuert werden kann oder mehrere angeschlossene Beleuchtungseinrichtungen unterschiedlich angesteuert werden können.

Unter einer "Kennung" im Sinne der Erfindung ist eine insbesondere eindeutige Information zu verstehen, welche einer eindeutigen Adressierung einer Beleuchtungseinrichtung dient. So weichen die Kennungen verschiedener angeschlossener Beleuchtungseinrichtungen voneinander ab.

Falls vorgesehen, enthält auch das Betriebszustandssignal, welches von einer Nebensteuereinrichtung einer Beleuchtungseinrichtung über die Stromleiteinrichtung an die Hauptsteuereinrichtung übertragen wird, vorzugsweise eine derartige Kennung.

In einer noch weiteren bevorzugten Ausgestaltung der Erfindung sind in dem Beleuchtungssystem mehrere Beleuchtungseinrichtungen vorgesehen, deren Leuchtmittel zumindest teilweise redundant sind. Diese bevorzugte Ausgestaltung bietet den Vorteil, dass das Beleuchtungssystem mit redundanten Beleuchtungseinrichtungen ausgerüstet werden kann, welche von der Hauptsteuerung bei Bedarf, d.h. zum Beispiel im Fall eines Defekts oder einer Fehlfunktion einer Beleuchtungseinrichtung, automatisch in entsprechender Weise angesteuert werden können.

In einer noch weiteren Ausgestaltung der Erfindung kann eine Beleuchtungseinrichtung des Beleuchtungssystems neben den Leuchtmitteln weitere elektrische Verbraucher enthalten oder mit solchen kombiniert sein. Diese weiteren elektrischen Verbraucher empfangen ihre Betriebsanweisungen dann vorzugsweise ebenfalls über die Stromleiteinrichtung des Beleuchtungssystems.

Zu den weiteren elektrischen Verbrauchern zählen in diesem Zusammenhang insbesondere Komponenten einer Klimaanlage (z.B. Luftdüsen, Gebläse, Heizung, etc.), Steller für einen Passagiersitz, Ausgabeeinrichtungen (z.B. Anzeigen, Displays, Lautsprecher, etc.) und dergleichen.

Gegenstand der vorliegenden Erfindung ist auch ein Massentransportmittel, insbesondere ein Schienenfahrzeug, das mit zumindest einem erfindungsgemäßen Beleuchtungssystem ausgestattet ist.

Gegenstand der vorliegenden Erfindung ist ferner Verfahren zum Betrieb eines Beleuchtungssystems, insbesondere eines Beleuchtungssystems gemäß der Erfindung, wobei das Beleuchtungssystem eine Energieversorgungseinrichtung zum Bereitstellen einer vorbestimmten elektrischen Versorgungsspannung, vorzugsweise einer vorbestimmten Versorgungsgleichspannung oder einer Versorgungswechselspannung, und wenigstens eine Beleuchtungseinrichtung, welche über eine Stromleiteinrichtung mit der Energieversorgungseinrichtung elektrisch leitend verbunden ist und wenigstens ein Leuchtmittel aufweist, aufweist, und das Verfahren die Schritte aufweist: Bereitstellen eines Betriebssignals durch eine Hauptsteuereinrichtung; Übertragen des bereitgestellten Betriebssignals über die Stromleiteinrichtung an die wenigstens eine Beleuchtungseinrichtung; Empfangen des über die Stromleiteinrichtung übertragenen Betriebssignals durch eine Nebensteuereinrichtung der wenigstens einen Beleuchtungseinrichtung; und Steuern eines Betriebszustandes des wenigstens einen Leuchtmittels der wenigstens einen Beleuchtungseinrichtung durch die Nebensteuereinrichtung in Abhängigkeit von dem empfangenen Betriebssignal.

Mit diesem Betriebsverfahren eines Beleuchtungssystems können die gleichen Vorteile erzielt werden, die oben in Zusammenhang mit dem erfindungsgemäßen Beleuchtungssystem genannt worden sind.

In einer bevorzugten Ausgestaltung der Erfindung wird das Betriebssignal über die Stromleiteinrichtung als ein auf die Versorgungsspannung der Energieversorgungseinrichtung aufmoduliertes Modulationssignal oder als ein Niederspannungssignal, dessen Signalpegel unter dem Versorgungsspannungsniveau der Energieversorgungseinrichtung liegt, übertragen.

In einer weiteren bevorzugten Ausgestaltung der Erfindung wird wenigstens ein Betriebsparameter des wenigstens einen Leuchtmittels der Beleuchtungseinrichtung erfasst und wird durch die Nebensteuereinrichtung der jeweiligen Beleuchtungseinrichtung ein dem wenigstens einen erfassten Betriebsparameter entsprechendes Betriebszustandssignal über die Stromleiteinrichtung an die Hauptsteuereinrichtung übertragen.

Weitere besonders bevorzugte Ausgestaltungen des erfindungsgemäßen Verfahrens entsprechen den obigen Erläuterungen in Zusammenhang mit dem erfindungsgemäßen Beleuchtungssystem.

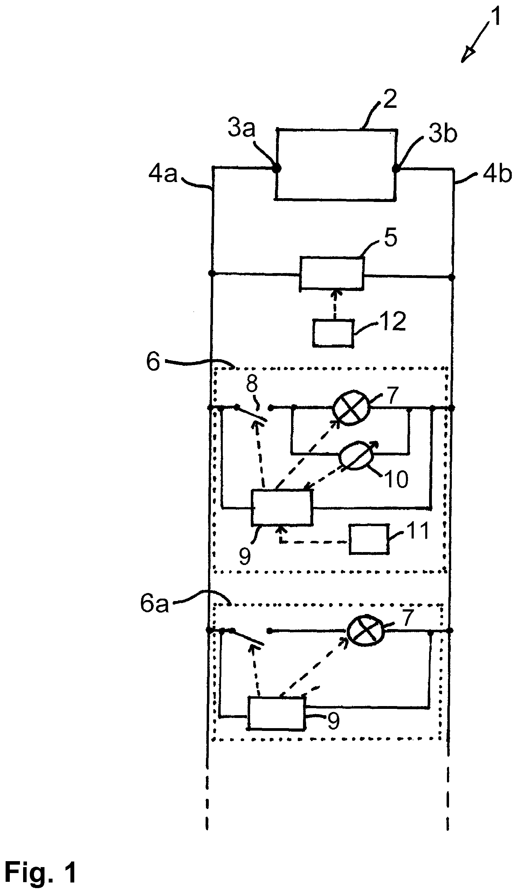

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnung besser verständlich. Darin zeigt die einzige Figur 1 schematisch eine bevorzugte Ausgestaltung eines Beleuchtungssystems für ein Schienenfahrzeug mit zwei Beleuchtungseinrichtungen.

Das Beleuchtungssystem 1 weist ein Bordnetz auf, welches mit einer Energieversorgungseinrichtung 2 und einer daran angeschlossenen Stromleiteinrichtung ausgebildet ist. Die Energieversorgungseinrichtung 2 weist zwei Versorgungsanschlüsse 3a, 3b auf und stellt die Versorgungsspannung (insbesondere in Form einer Gleichspannung) bereit. Die Stromleiteinrichtung weist genau eine erste Zuleitung 4a und genau eine zweite Zuleitung 4b auf. Die erste Zuleitung 4a ist mit dem ersten Versorgungsanschluss 3a verbunden. Die zweite Zuleitung 4b ist mit dem zweiten Versorgungsanschluss 3b verbunden. Die Spannung zwischen den Zuleitungen 4a, 4b wird nachfolgend Busspannung genannt.

Das Beleuchtungssystem 1 weist weiter eine Hauptsteuereinrichtung 5 auf. Die Hauptsteuereinrichtung 5 ist an die Zuleitungen 4a, 4b angeschlossen. Die Hauptsteuereinrichtung 5 wird aus der Energieversorgungseinrichtung 2 mit elektrischer Energie versorgt. Nicht dargestellt ist ein Spannungswandler zwischen der Hauptsteuereinrichtung 5 und dem Bordnetz zur Anpassung der Versorgungsspannung an die Betriebsspannung der Hauptsteuereinrichtung 5. Nicht dargestellt ist auch ein Datenspeicher, auf welchen die Hauptsteuereinrichtung 5 zugreifen kann. Der Datenspeicher enthält vorzugsweise ein Übertragungsprotokoll, ein Maßnahmenplan, einen Zeitplan und dergleichen.

Mit der Hauptsteuereinrichtung 5 ist zudem eine Bedienvorrichtung 12 verbunden bzw. gekoppelt. Über diese Bedienvorrichtung 12 kann die Hauptsteuereinrichtung 5 programmiert oder eingestellt werden.

An das Bordnetz, bzw. an dessen Stromleiteinrichtung angeschlossen, sind wenigstens zwei Beleuchtungseinrichtungen 6, 6a. Jede dieser Beleuchtungseinrichtungen 6, 6a weist ein Leuchtmittel 7, eine Schaltvorrichtung 8, eine Nebensteuereinrichtung 9, eine als Strommesser ausgebildete Messeinrichtung 10 und eine lokale Bedienvorrichtung 11 auf. Nicht dargestellt in Figur 1 sind zweite Spannungswandler, welche die Versorgungsspannung bzw. Busspannung an die Betriebsspannung der Nebensteuereinrichtungen 9 anpassen. Über Steuerleitungen (gestrichelt dargestellt) sind die Nebensteuereinrichtungen 9 mit den Schaltvorrichtungen 8, den Strommessern 10 und den Bedienvorrichtungen 11 verbunden.

Aufgrund des Zeitplans, des Maßnahmenplans oder eine manuellen Aufforderung durch einen Bediener, stellt die Hauptsteuereinrichtung 5 ein Betriebssignal bereit, welches über die Zuleitungen 4a, 4b der Stromleiteinrichtung übertragen wird. Dieses Betriebssignal enthält vorzugsweise auch eine entsprechende Kennung für die angeschlossenen Beleuchtungseinrichtungen 6, 6a, welche mit dem Betriebssignal angesteuert werden sollen.

Die Nebensteuereinrichtungen 9 der Beleuchtungseinrichtungen 6, 6a prüfen in einem ersten Schritt, insbesondere periodisch, ob der Busspannung der Stromleiteinrichtung ein Betriebssignal entnehmbar ist. In einem zweiten Schritt prüfen die Nebensteuereinrichtungen 9, ob das erkannte Betriebssignal die Kennung der jeweiligen Beleuchtungseinrichtung 6 enthält.

Falls ja, dann steuert die jeweilige Nebensteuereinrichtung 9 die Beleuchtungseinrichtung 6, 6a bzw. deren Leuchtmittel 7 entsprechend dem empfangenen Betriebssignal. In dem gezeigten Ausführungsbeispiel schaltet sie die zugehörige Schaltvorrichtung 8 entsprechend dem Betriebssignal ein oder aus, um das Leuchtmittel 7 mit der elektrischen Energieversorgung über die Stromleiteinrichtung zu verbinden oder von dieser zu trennen. Alternativ oder zusätzlich kann die Nebensteuereinrichtung 9 auch andere Betriebsparameter des Leuchtmittels 7 wie zum Beispiel Helligkeit und/oder Farbe direkt steuern, d.h. das Leuchtmittel 7 beispielsweise dimmen.

Der Strommesser 10 erfasst nun die Stärke des elektrischen Stroms durch das Leuchtmittel 7, nachfolgend Stromstärke genannt, und gibt den Messwert an die Nebensteuereinrichtung 9. Wenn die erfasste Stromstärke außerhalb eines vorbestimmten Betriebsparameterintervalls liegt, d.h. ein unerwünschter Betriebszustand vorliegt, dann stellt die Nebensteuereinrichtung 9 ein entsprechendes Betriebszustandssignal bereit und fügt diesem die eigene Kennung bei.

Vorzugsweise leitet die Hauptsteuereinrichtung 5 beim Empfangen eines solchen Betriebszustandssignals von einer Beleuchtungseinrichtung 6, 6a mit erfasstem Defekt eine vorbestimmte Abstellmaßnahme ein. Besonders bevorzugt stellt die Hauptsteuereinrichtung 5 ein weiteres Betriebssignal bereit, gemeinsam mit einer Kennung, welche zu einer redundanten Beleuchtungseinrichtung 6a gehört, welche die defekte Beleuchtungseinrichtung 6 ersetzen soll.

Außerdem schaltet die Hauptsteuereinrichtung 5 in einem solchen Fall vorzugsweise mit einem entsprechenden weiteren Betriebssignal die defekte Beleuchtungseinrichtung 6 ab.

Über die lokalen Bedienvorrichtungen 11 kann ein Benutzer zudem die Beleuchtungseinrichtung 6, 6a, zum Beispiel eine Leseleuchte, nach seinen Bedürfnissen einstellen, d.h. zum Beispiel einschalten und dimmen. Die von der Nebensteuereinrichtung 9 über diese Bedienvorrichtung 11 empfangenen Steuersignale bzw. Betriebsanweisungen werden jedoch vorzugsweise von den Betriebssignalen der Hauptsteuereinrichtung 5 überschrieben. Mit anderen Worten kann vom Benutzer eine Leseleuchte 6, 6a, zum Beispiel nur dann eingeschaltet werden, wenn dies von der Hauptsteuereinrichtung 5 für die Leseleuchten 6, 6a des Beleuchtungssystems 1 zu diesem Zeitpunkt grundsätzlich zugelassen wird.

### BEZUGSZEICHEN

- 1: Beleuchtungssystem
- 2: Energieversorgungseinrichtung
- 3a, 3b: Versorgungsanschlüsse von 2
- 4a, 4b: Zuleitungen von 4
- 5: Hauptsteuereinrichtung
- 6, 6a: Beleuchtungseinrichtungen
- 7: Leuchtmittel
- 8: Schaltvorrichtung
- 9: Nebensteuereinrichtung
- 10: Messeinrichtung
- 11: Bedienvorrichtung
- 12: Bedienvorrichtung

## Patentansprüche

1. Beleuchtungssystem (1) für ein Massentransportmittel, aufweisend:
• eine Energieversorgungseinrichtung (2) zum Bereitstellen einer vorbestimmten elektrischen Versorgungsspannung;
• eine Stromleiteinrichtung, die mit der Energieversorgungseinrichtung (2) und wenigstens einem Leuchtmittel (7) elektrisch leitend verbunden ist; und
• eine Hauptsteuereinrichtung (5), welche vorgesehen ist, um über die Stromleiteinrichtung ein Betriebssignal an das wenigstens eine Leuchtmittel (7) zu übertragen;
**dadurch gekennzeichnet, dass**
• eine erste Zuleitung (4a) und eine zweite Zuleitung (4b) die Stromleiteinrichtung bildet, wobei die erste Zuleitung (4a) mit einem ersten Versorgungsanschluss (3a) der Energieversorgungseinrichtung (2) und die zweite Zuleitung (4b) mit einem zweiten Versorgungsanschluss (3b) der Energieversorgungseinrichtung (2) verbunden sind;
• die Hauptsteuereinrichtung (5) an die erste Zuleitung (4a) und die zweite Zuleitung (4b) angeschlossen ist;
• wenigstens zwei Beleuchtungseinrichtungen (6, 6a) vorgesehen sind, und jede Beleuchtungseinrichtung (6, 6a), wenigstens ein Leuchtmittel (7), eine Schaltvorrichtung (8), eine Nebensteuereinrichtung (9) und eine als Strommesser ausgebildete Messeinrichtung (10) aufweist, die mit der ersten Zuleitung (4a) und der zweiten Zuleitung (4b) elektrisch leitend verbunden sind;
• die Nebensteuereinrichtung (9) einer jeden Beleuchtungseinrichtung (6, 6a) über die erste Zuleitung (4a) und die zweite Zuleitung (4b) das von der Hauptsteuereinrichtung (5) übertragene Betriebssignal empfängt und einen Betriebszustand des wenigstens einen Leuchtmittels (7) der Beleuchtungseinrichtungen (6, 6a) in Abhängigkeit von dem empfangenen Betriebssignal steuert; und
• die Hauptsteuereinrichtung (5) über die erste Zuleitung (4a) und die zweite Zuleitung (4b) von der Nebensteuereinrichtung (9) ein Betriebszustandssignal einer der Beleuchtungseinrichtungen (6, 6a) empfängt.

2. Beleuchtungssystem (1) nach Anspruch 1,
**dadurch gekennzeichnet, dass**
zwischen der Hauptsteuereinrichtung (5) und der ersten Zuleitung (4a) und der zweiten Zuleitung (4b) ein Spannungswandler geschaltet ist, welcher die Versorgungsspannung an die Betriebsspannung der Hauptsteuereinrichtung (5) anpasst.

3. Beleuchtungssystem (1) nach einem der vorhergehenden Ansprüche,
**dadurch gekennzeichnet, dass**
die Hauptsteuereinrichtung (5) ausgestaltet ist, um das Betriebssignal über die erste Zuleitung (4a) und die zweite Zuleitung (4b) als ein auf die Versorgungsspannung der Energieversorgungseinrichtung (2) aufmoduliertes Modulationssignal oder als ein Niederspannungssignal, dessen Signalpegel unter dem Versorgungsspannungsniveau der Energieversorgungseinrichtung liegt, zu übertragen.

4. Beleuchtungssystem (1) nach einem der vorhergehenden Ansprüche,
**dadurch gekennzeichnet, dass**
• die wenigstens eine Beleuchtungseinrichtung (6, 6a), die Messeinrichtung (10) zum Erfassen wenigstens eines Betriebsparameters des wenigstens einen Leuchtmittels (7) der Beleuchtungseinrichtung (6, 6a) aufweist; und
• die Nebensteuereinrichtung (9) ausgestaltet ist, um über die erste Zuleitung (4a) und die zweite Zuleitung (4b) ein dem wenigstens einen erfassten Betriebsparameter entsprechendes Betriebszustandssignal an die Hauptsteuereinrichtung (5) zu übertragen.

5. Beleuchtungssystem (1) nach einem der vorhergehenden Ansprüche,
**dadurch gekennzeichnet, dass**
das von der Hauptsteuereinrichtung (5) übertragene Betriebssignal eine Kennung zur Adressierung wenigstens einer der wenigstens einen Beleuchtungseinrichtung (6, 6a) enthält.

6. Beleuchtungssystem (1) nach einem der vorhergehenden Ansprüche,
**dadurch gekennzeichnet, dass**
mehrere Beleuchtungseinrichtungen (6, 6a) vorgesehen sind, deren Leuchtmittel (7) zumindest teilweise redundant sind.

7. Beleuchtungssystem (1) nach einem der vorhergehenden Ansprüche,
**dadurch gekennzeichnet, dass**
jeder der Beleuchtungseinrichtungen (6, 6a) einer lokale Bedienvorrichtung (11) zugeordnet ist.

8. Massentransportmittel, insbesondere Schienenfahrzeuge, mit einem Beleuchtungssystem (1) nach einem der vorhergehenden Ansprüche.

9. Verfahren zum Betrieb eines Beleuchtungssystems nach einem der Ansprüche 1 bis 7, wobei das Beleuchtungssystem (1) eine Energieversorgungseinrichtung (2) zum Bereitstellen einer vorbestimmten elektrischen Versorgungsspannung, vorzugsweise einer vorbestimmten Versorgungsgleichspannung und wenigstens zwei Beleuchtungseinrichtungen (6, 6a), welche über die erste Zuleitung (4a) und die zweite Zuleitung (4b) mit der Energieversorgungseinrichtung (2) elektrisch leitend verbunden sind und wenigstens ein Leuchtmittel (7) aufweist, umfassend die Schritte:
• Bereitstellen eines Betriebssignals durch eine Hauptsteuereinrichtung (5);
• Übertragen des bereitgestellten Betriebssignals über die erste Zuleitung (4a) und die zweite Zuleitung (4b) an die wenigstens zwei Beleuchtungseinrichtungen (6, 6a);
• Empfangen des über die erste Zuleitung (4a) und die zweite Zuleitung (4b) übertragenen Betriebssignals durch eine Nebensteuereinrichtung (9) der wenigstens zwei Beleuchtungseinrichtungen (6, 6a); und
• Steuern eines Betriebszustandes des wenigstens einen Leuchtmittels (7) der wenigstens zwei Beleuchtungseinrichtungen (6, 6a) durch die Nebensteuereinrichtung (9) in Abhängigkeit von dem empfangenen Betriebssignal.

10. Verfahren nach Anspruch 9,
**dadurch gekennzeichnet, dass**
das Betriebssignal über die erste Zuleitung (4a) und die zweite Zuleitung (4b) als ein auf die Versorgungsspannung der Energieversorgungseinrichtung (2) aufmoduliertes Modulationssignal oder als ein Niederspannungssignal, dessen Signalpegel unter dem Versorgungsspannungsniveau der Energieversorgungseinrichtung liegt, übertragen wird.

11. Verfahren nach Anspruch 9 oder 10,
**dadurch gekennzeichnet, dass**
wenigstens ein Betriebsparameter des wenigstens einen Leuchtmittels (7) der wenigstens zwei Beleuchtungseinrichtungen (6, 6a) erfasst wird; und durch die Nebensteuereinrichtung (9) der Beleuchtungseinrichtungen (6, 6a) ein dem wenigstens einen erfassten Betriebsparameter entsprechendes Betriebszustandssignal über die erste Zuleitung (4a) und die zweite Zuleitung (4b) an die Hauptsteuereinrichtung (5) übertragen wird.

12. Verfahren nach Anspruch 11,
**dadurch gekennzeichnet, dass**
die Betriebssignale der Hauptsteuereinrichtung (5) und die Betriebszustandssignale der Nebensteuereinrichtung (9) in verschiedenen Zeitintervallen über die erste Zuleitung (4a) und die zweite Zuleitung (4b) übertragen werden.

13. Verfahren nach einem der Ansprüche 9 bis 12,
**dadurch gekennzeichnet, dass**
die Hauptsteuereinrichtung (5) das Betriebssignal bereitstellt auf Basis
• eines hinterlegten Zeitplans, welcher Zeitpunkte zum Einschalten und/oder Ausschalten der angeschlossenen Beleuchtungseinrichtungen (6, 6a) enthält, oder
• eines Signals einer nicht dem Beleuchtungssystem zugehörigen Steuerung, oder
• einer Betätigung einer zugehörigen Bedieneinrichtung durch einen Bediener, oder
• eines hinterlegten Maßnahmenplans, welcher Abstellmaßnahmen, insbesondere zur Reaktion auf unerwünschte Betriebszustände der Beleuchtungseinrichtungen oder anderer Verbrauchseinrichtungen, enthält.

## Claims

1. Lighting system (1) for a mass transport means, comprising:
• a power supply device (2) for providing a predesignated electrical power supply voltage;
• a current-conducting device which is electrically conductively connected to the power supply device (2) and to at least one light-emitting means (7); and
• a main control device (5) which is provided to transmit an operating signal to the at least one light-emitting means (7) via the current-conducting device;
**characterized in that**
• a first supply line (4a) and a second supply line (4b) form the current-conducting device, wherein the first supply line (4a) is connected to a first supply connection (3a) of the power supply device (2) and the second supply line (4b) is connected to a second supply connection (3b) of the power supply device (2);
• the main control device (5) is connected to the first supply line (4a) and to the second supply line (4b);
• at least two illumination devices (6, 6a) are provided, and each illumination device (6, 6a) comprises at least one light-emitting means (7), a switching device (8), an auxiliary control device (9), and a measuring device (10) configured as an ammeter, which are electrically conductively connected to the first supply line (4a) and to the second supply line (4b);
• the auxiliary control device (9) of each illumination device (6, 6a) receives, via the first supply line (4a) and the second supply line (4b), the operating signal transmitted by the main control device (5) and controls an operating state of the at least one light-emitting means (7) of the illumination devices (6, 6a) as a function of the received operating signal; and
• the main control device (5) receives from the auxiliary control device (9), via the first supply line (4a) and the second supply line (4b), an operating state signal of one of the illumination devices (6, 6a).

2. Lighting system (1) according to claim 1, wherein a voltage transformer is connected between the main control device (5) and the first supply line (4a) and the second supply line (4b), which voltage transformer adapts the supply voltage to the operating voltage of the main control device (5).

3. Lighting system (1) according to any one of the preceding claims, wherein the main control device (5) is configured to transmit the operating signal via the first supply line (4a) and the second supply line (4b) as a modulation signal modulated onto the supply voltage of the power supply device (2) or as a low-voltage signal, the signal level of which is below the supply voltage level of the power supply device.

4. Lighting system (1) according to any one of the preceding claims, wherein
• the at least one illumination device (6, 6a) comprises the measuring device (10) for detecting at least one operating parameter of the at least one light-emitting means (7) of the illumination device (6, 6a); and
• the auxiliary control device (9) is configured to transmit to the main control device (5), via the first supply line (4a) and the second supply line (4b), an operating state signal corresponding to the at least one detected operating parameter.

5. Lighting system (1) according to any one of the preceding claims, wherein the operating signal transmitted by the main control device (5) contains an identifier for addressing at least one of the at least one illumination device (6, 6a).

6. Lighting system (1) according to any one of the preceding claims, wherein a plurality of illumination devices (6) are provided, the light-emitting means (7) of which are at least partially redundant.

7. Lighting system (1) according to any one of the preceding claims, wherein a local operating device (11) is assigned to each of the illumination devices (6, 6a).

8. Mass transport means, in particular rail vehicles, comprising a lighting system (1) according to any one of the preceding claims.

9. Method for operating a lighting system according to any one of claims 1 to 7, wherein the lighting system (1) comprises a power supply device (2) for providing a predesignated electrical power supply voltage, preferably a predesignated DC supply voltage, and at least two illumination devices (6, 6a) which are electrically conductively connected to the power supply device (2) via the first supply line (4a) and the second supply line (4b), and at least one light-emitting means (7), said method comprising the steps:
• providing an operating signal by a main control device (5);
• transmitting the provided operating signal via the first supply line (4a) and the second supply line (4b) to the at least two illumination devices (6, 6a);
• receiving the operating signal, transmitted via the first supply line (4a) and the second supply line (4b), by an auxiliary control device (9) of the at least two illumination devices (6, 6a); and
• controlling an operating state of the at least one light-emitting means (7) of the at least two illumination devices (6, 6a) by the auxiliary control device (9) as a function of the received operating signal.

10. Method according to claim 9, wherein the operating signal is transmitted via the first supply line (4a) and the second supply line (4b) as a modulation signal modulated onto the supply voltage of the power supply device (2) or as a low-voltage signal, the signal level of which is below the supply voltage level of the power supply device.

11. Method according to claim 9 or 10, wherein
at least one operating parameter of the at least one light-emitting means (7) of the at least two illumination devices (6, 6a) is detected; and
an operating state signal corresponding to the at least one detected operating parameter is transmitted to the main control device (5) by the auxiliary control device (9) of the illumination devices (6, 6a) via the first supply line (4a) and the second supply line (4b).

12. Method according to claim 11, wherein the operating signals of the main control device (5) and the operating state signals of the auxiliary control device (9) are transmitted via the first supply line (4a) and the second supply line (4b) at different time intervals.

13. Method according to any one of claims 9 to 12, wherein the main control device (5) provides the operating signal on the basis of
• a stored schedule which contains times for switching on and/or switching off the connected illumination devices (6, 6a), or
• a signal from a controller unassociated with the lighting system, or
• an actuation of an associated operating device by an operator, or
• a stored plan of action which contains remedial measures, in particular for reacting to undesired operating states of the illumination devices or other consumer devices.

## Revendications

1. Système d'éclairage (1) pour un moyen de transport en commun, comprenant:
• une installation d'alimentation en énergie (2) destinée à fournir une tension d'alimentation électrique prédéterminée ;
• une installation de conduction de courant reliée de façon conductrice électrique avec l'installation d'alimentation en énergie (2) et avec au moins une lampe (7) et
• une installation de commande principale (5) qui est conçue pour transmettre un signal de fonctionnement à l'au moins une lampe (7) via l'installation de conduction de courant,
**caractérisé en ce que**
• une première ligne d'arrivée (4a) et une deuxième (4b) forment l'installation de conduction de courant, la première ligne d'arrivée (4a) étant reliée à un premier branchement d'alimentation (3a) de l'installation d'alimentation en énergie (2) et la deuxième ligne d'arrivée (4b) à un deuxième branchement d'alimentation (3b) de l'installation d'alimentation en énergie (2) ;
• l'installation de commande principale (5) est raccordée à la première ligne d'arrivée (4a) et à la deuxième ligne d'arrivée (4b) ;
• au moins deux installations d'éclairage (6, 6a) sont prévues et chaque installation d'éclairage (6, 6a) comprend au moins une lampe (7), un dispositif de commutation (8), une installation de commande secondaire (9) et une installation de mesure (10) conçue comme un ampèremètre, qui sont reliées de façon conductrice électrique à la première ligne d'arrivée (4a) et à la deuxième ligne d'arrivée (4b) ;
• l'installation de commande secondaire (9) de chaque installation d'éclairage (6, 6a) reçoit le signal de fonctionnement de l'installation de commande principale (5) via la première ligne d'arrivée (4a) et la deuxième ligne d'arrivée (4b) et commande un état de fonctionnement de l'au moins une lampe (7) des installations d'éclairage (6, 6a) en fonction du signal de fonctionnement reçu ; et
• l'installation de commande principale (5) reçoit via la première ligne d'arrivée (4a) et la deuxième ligne d'arrivée (4b) un signal d'état de fonctionnement de l'une des installations d'éclairage (6, 6a) envoyé par l'installation de commande secondaire (9).

2. Système d'éclairage (1) selon la revendication 1, **caractérisé en ce qu'**est monté entre l'installation de commande principale (5) et la première ligne d'arrivée (4a) et la deuxième ligne d'arrivée (4b) un convertisseur de tension qui adapte la tension d'alimentation à la tension de fonctionnement de l'installation de commande principale (5).

3. Système d'éclairage (1) selon l'une des revendications précédentes, **caractérisé en ce que** l'installation de commande principale (5) est conformée pour transmettre le signal de fonctionnement via la première ligne d'arrivée (4a) et la deuxième ligne d'arrivée (4b) sous la forme d'un signal modulé à la tension d'alimentation de l'installation d'alimentation en énergie (2) ou d'un signal de basse tension dont le niveau de signal est inférieur au niveau de la tension d'alimentation de l'installation d'alimentation en énergie.

4. Système d'éclairage (1) selon l'une des revendications précédentes, **caractérisé en ce que**
• l'au moins une installation d'éclairage (6, 6a) comprend l'installation de mesure (10) pour détecter au moins un paramètre de fonctionnement de l'au moins une lampe (7) de l'installation d'éclairage (6, 6a) et
• l'installation de commande secondaire (9) est conçue pour transmettre à l'installation de commande principale (5), via la première ligne d'arrivée (4a) et la deuxième ligne d'arrivée (4b), un signal d'état de fonctionnement correspondant à l'au moins un paramètre de fonctionnement détecté.

5. Système d'éclairage (1) selon l'une des revendications précédentes, **caractérisé en ce que** le signal de fonctionnement transmis par l'installation de commande principale (5) contient une identification pour l'adressage d'au moins une des au moins une installation d'éclairage (6, 6a).

6. Système d'éclairage (1) selon l'une des revendications précédentes, **caractérisé en ce qu'**il est prévu plusieurs installations d'éclairage (6, 6a), dont les lampes (7) sont au moins en partie redondantes.

7. Système d'éclairage (1) selon l'une des revendications précédentes, **caractérisé en ce que** chacune des installations d'éclairage (6, 6a) est associée à un dispositif d'actionnement local (11).

8. Moyens de transport en commun, en particulier véhicules ferroviaires, avec un système d'éclairage (1) selon l'une des revendications précédentes.

9. Procédé pour le fonctionnement d'un système d'éclairage selon l'une des revendications 1 à 7, dans lequel le système d'éclairage (1) comprend une installation d'alimentation en énergie (2) destinée à fournir une tension d'alimentation électrique prédéterminée, de préférence une tension de courant continu d'alimentation prédéterminée, et au moins deux installations d'éclairage (6, 6a) qui sont reliées de façon conductrice électrique à l'installation d'alimentation en énergie (2) par la première ligne d'arrivée (4a) et la deuxième ligne d'arrivée (4b) et au moins une lampe (7), comprenant les étapes de :
• fourniture d'un signal de fonctionnement par une installation de commande principale (5) ;
• transmission du signal de fonctionnement fourni via la première ligne d'arrivée (4a) et la deuxième ligne d'arrivée (4b) aux au moins deux installations d'éclairage (6, 6a),
• réception du signal de fonctionnement transmis via la première ligne d'arrivée (4a) et la deuxième ligne d'arrivée (4b) par une installation de commande secondaire (9) des au moins deux installations d'éclairage (6, 6a); et
• commande d'un état de fonctionnement de l'au moins une lampe (7) des au moins deux installations d'éclairage (6, 6a) par l'installation de commande secondaire (9) en fonction du signal de fonctionnement reçu.

10. Procédé selon la revendication 9, **caractérisé en ce que** le signal de fonctionnement est transmis via la première ligne d'arrivée (4a) et la deuxième ligne d'arrivée (4b) sous la forme d'un signal de modulation modulé à la tension d'alimentation de l'installation d'alimentation en énergie (2) ou d'un signal de basse tension dont le niveau de signal est inférieur au niveau de la tension d'alimentation de l'installation d'alimentation en énergie.

11. Procédé selon la revendication 9 ou 10, **caractérisé en ce qu'**au moins un paramètre de fonctionnement de l'au moins une lampe (7) des au moins deux installations d'éclairage (6, 6a) est détecté ; et l'installation de commande secondaire (9) des installations d'éclairage (6, 6a) transmet un signal d'état de fonctionnement correspondant à l'au moins un paramètre de fonctionnement détecté à l'installation de commande principale (5) via la première ligne d'arrivée (4a) et la deuxième ligne d'arrivée (4b).

12. Procédé selon la revendication 11, **caractérisé en ce que** les signaux de fonctionnement de l'installation de commande principale (5) et ceux de l'installation de commande secondaire (9) sont transmis à des intervalles de temps différents sur la première ligne d'arrivée (4a) et la deuxième ligne d'arrivée (4b).

13. Procédé selon l'une des revendications 9 à 12, **caractérisé en ce que** l'installation de commande principale (5) fournit le signal de fonctionnement sur la base
• d'un programme de temporisation stocké en mémoire, qui contient des instants pour l'allumage et/ou l'extinction des installations d'éclairage (6, 6a) raccordés, ou
• d'un signal d'une commande qui ne fait pas partie du système d'éclairage, ou
• de l'actionnement d'une installation d'actionnement correspondante par un utilisateur, ou
• d'un plan de mesures stocké en mémoire qui contient des mesures de mise à l'arrêt, en particulier pour la réaction à des états de fonctionnement intempestifs des installations d'éclairage ou d'autres installations consommatrices.
